(19) Europäisches Patentamt
European Patent Office
Office européen des brevets

(11) Veröffentlichungsnummer: **0 039 815**
**A1**

# (12) EUROPÄISCHE PATENTANMELDUNG

(21) Anmeldenummer: 81103146.7

(22) Anmeldetag: 27.04.81

(51) Int. Cl.³: G 21 C 19/36

(30) Priorität: 08.05.80 DE 3017674

(43) Veröffentlichungstag der Anmeldung: 18.11.81 Patentblatt 81/46

(84) Benannte Vertragsstaaten: DE FR GB

(71) Anmelder: KRAFTWERK UNION AKTIENGESELLSCHAFT
Wiesenstrasse 35
D-4330 Mülheim (Ruhr)(DE)

(72) Erfinder: Stumpf, Willi
Zeisigweg 20
D-6370 Oberursel(DE)

(72) Erfinder: Queiser, Horst
Maulbeerweg 7
D-6457 Maintal 3(DE)

(72) Erfinder: Kühnel, Roland
Berliner Strasse 92
D-6057 Dietzenbach(DE)

(72) Erfinder: Zeitzschel, Günter
Gottfried-Keller-Strasse 64
D-6000 Frankfurt Main(DE)

(72) Erfinder: Dannehl, Günter
Westendstrasse 51
D-6057 Dietzenbach(DE)

(74) Vertreter: Mehl, Ernst, Dipl.-Ing. et al,
Postfach 22 01 76
D-8000 München 22(DE)

## (54) Verfahren und Einrichtung zur Aufbereitung von Kernbrennstoffen.

(57) Zur Aufbereitung von Kernbrennstoffen, die in Brennelementen mit mehreren metallischen Hüllrohren (3) vorliegen, wie sie insbesondere für Leichtwasserreaktoren üblich sind, werden die aus dem Verband des Brennelementes gelösten Hüllrohre (3) einzeln in Längsrichtung geteilt, so daß der Kernbrennstoff (2) von den Metallteilen (16) gelöst werden kann. Der Kernbrennstoff (2) wird dann für sich in ein zur weiteren Verarbeitung dienendes Säurebad gefüllt, während die Metallteile (16) in fester Form durch Einbetten in ein Bindemittel zur Endlagerung konditioniert werden.

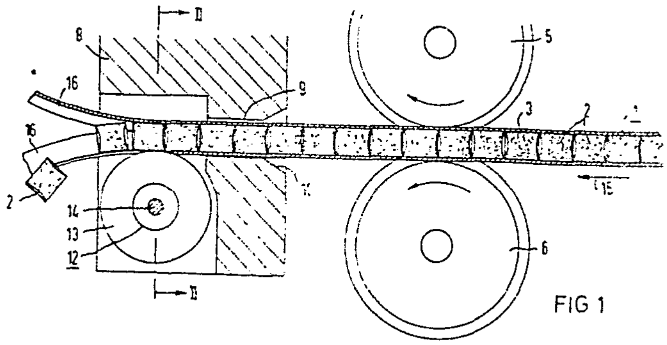


FIG 1

EP 0 039 815 A1

BAD ORIGINAL

KRAFTWERK UNION AKTIENGESELLSCHAFT   Unser Zeichen
VPA 80 P 9 3 2 9 E

Verfahren und Einrichtung zur Aufbereitung von Kernbrennstoffen

Die Erfindung betrifft ein Verfahren zur Aufbereitung von Kernbrennstoffen in Brennelementen mit mehreren metallischen Hüllrohren, insbesondere von Leichtwasserreaktoren, wobei die Hüllrohre aus dem Verband des Brennelementes gelöst und einzeln mechanisch zerteilt werden. Gegenstand der Erfindung ist ferner eine zur Zerteilung dienende Einrichtung.

Mit dem Zerteilen der Brennstäbe bildenden Hüllrohre hat man bisher vor allem die Hantierbarkeit zu verbessern versucht, weil die Brennstäbe von Leichtwasserreaktoren der heutzutage üblichen Leistungsgrößen (1 000 $MW_e$ und mehr) bei einem Durchmesser von etwa 1 cm Längen von 4 m und mehr aufweisen. Zur Zerstückelung erfolgte eine Unterteilung quer zur Längsrichtung. Die unterteilten Brennstäbe wurden dann in ein Säurebad gegeben, um eine Trennung des Brennstoffes von den Hüllrohrteilen in gelöster Form zu ermöglichen. Hierbei ist jedoch der Aufwand an Lösungsmitteln und Lösungszeit relativ groß, so daß die Erfindung von der Aufgabe ausgeht, eine günstigere Möglichkeit zur Abtrennung des Brennstoffes für die weitere Wiederaufbereitung zu finden.

Gemäß der Erfindung ist vorgesehen, daß die Hüllrohre in Längsrichtung geteilt werden, daß der Kernbrennstoff von den Metallteilen gelöst wird und daß der

Sm 2 Hgr / 5.5.1980

BAD ORIGINAL

Kernbrennstoff ohne Metallteile in ein zur weiteren Verarbeitung dienendes Säurebad gefüllt wird, während die Metallteile in fester Form durch Einbetten in ein Bindemittel zur Endlagerung konditioniert werden.

Bei der Erfindung wird durch die Längsteilung der Hüllrohre eine Zutrittsmöglichkeit zu dem Kernbrennstoff geschaffen, damit dieser von den Metallteilen gelöst und für sich verarbeitet werden kann. Man kann dann mit wesentlich weniger Aufwand für die chemische Lösung des Brennstoffes auskommen. Dies bedeutet, daß man vorzugsweise weniger konzentrierte Säure zur Lösung des Kernbrennstoffes einsetzen kann. Mit Säuren gleicher Konzentration verringert sich andererseits die Lösungszeit. Die Metallteile werden praktisch ohne Brennstoffreste nach bekannten Methoden zur Endlagerung konditioniert. Sie sind auch nicht mehr wie bei den bekannten Verfahren durch das brennstoffreiche Lösungsmittel benetzt und damit kontaminiert.

Um einen Zugang zu den Kernbrennstoffen zu schaffen, kann es genügen, die Längsteilung durch eine spanlose Verformung längs einer Mantellinie der üblicherweise zylindrischen Hüllrohre zu schaffen, wenn das Hüllrohr dann aufgeweitet wird. Der Aufweitungsvorgang kann mit einem Abstreifungsprozeß vereinigt werden, bei dem die Kernbrennstoffteile mechanisch vom Hüllrohr gelöst werden. Man kann das Hüllrohr aber durch mehrere Längsschnitte in Streifen zerteilen, die auch ohne weitere Verformung der Hüllrohrwand Zugang zum Brennstoff schaffen, so daß der Brennstoff vorzugsweise ohne weitere mechanische Einwirkung von den Streifen abfällt.

Im übrigen können auch die Streifen mit einem Abstreifer von Brennstoffresten befreit werden. Es ist ferner denkbar, daß die Hüllrohrstreifen einer mechanischen Behandlung, wie Schaben, Walzen oder Hämmern, unterzogen

BAD ORIGINAL

werden, um den Brennstoff abzulösen. Eine solche Behandlung kann zugleich eine mechanische Zerkleinerung des Brennstoffes ergeben, die vor dem Einbringen in die Säure günstig ist, weil die Angriffsfläche für die Säure vergrößert wird. Man kann den abgetrennten Brennstoff aber auch für sich mechanisch zerkleinern, um das Lösen in der Säure zu erleichtern.

Das Hüllrohr kann nach dem mechanischen Entfernen des Brennstoffes zusätzlich mit einer den Brennstoff lösenden Säure gewaschen werden. Der Reinigungsgrad wird dabei im allgemeinen durch die Strahlenbelastung vorgegeben sein, die für die weitere Bearbeitung des Hüllrohres zugelassen werden kann. In jedem Fall kann man die von dem Brennstoff befreiten Hüllrohre vor dem Einbetten in das Bindemittel vorteilhaft mechanisch zerkleinern. Besonders erscheint hierfür die Behandlung in einem Schredder geeignet, die kleine, gut dosiert einzubettende Teile liefert. Eine andere Möglichkeit besteht darin, die Hüllrohrstreifen aufzuwickeln oder zu falten bzw. zu pressen.

Zur näheren Erläuterung der Erfindung wird anhand der beiliegenden Zeichnung ein Ausführungsbeispiel beschrieben. Dabei zeigen die Fig. 1 und 2 in zwei zueinander senkrechten Darstellungen eine Einrichtung zur Auftrennung der mit Brennstoff gefüllten Hüllrohre aus Brennelementen eines Leichtwasserreaktors.

Bei der in der Zeichnung dargestellten Einrichtung ist vorausgesetzt, daß die zur Wiederaufbereitung vorgesehenen Brennelemente bereits so zerlegt sind, daß die Brennstäbe 1 einzeln bearbeitet werden können. Von den Brennstäben 1 sind ferner die Enden abgeschnitten, so daß vorzugsweise nur der den Kernbrennstoff in Form

BAD ORIGINAL

von Tabletten 2 enthaltende Abschnitt der Hüllrohre 3 weiter bearbeitet wird.

Der Brennstab 1 wird mit einem geeigneten Antriebsmittel, zum Beispiel einem nicht weiter dargestellten hydraulischen Stempel oder aber durch Antriebe von Transport- und Führungsrädern 5 und 6 in einen Messerhalter 8 geführt. Dieser besitzt eine dem Durchmesser des Hüllrohres 3 eng angepaßte Führungsbohrung 9 mit einem Einführungstrichter 10.

Unmittelbar hinter der Führungsbohrung 9 sind drei um 120° verteilte Trennmesser 12 angeordnet. Sie bestehen aus im Querschnitt keilförmig zugespitzten Scheiben 13 aus hochfestem Material, die auf Achsen 14 laufen. Die einander zugekehrten Schneiden der Trennmesser 12 sind so angeordnet, daß sie beim Zuführen des Hüllrohres in Richtung des Pfeiles 15 das zum Beispiel 0,85 mm dicke Hüllrohr auftrennen. Dadurch entstehen drei Blechstreifen 16, die sich durch den Verformungsvorgang der Trennmesser 12 aufwölben. Die Tabletten 2 hingegen werden aus dem Inneren des Hüllrohres 3 freigesetzt, so daß sie für sich in bekannter Weise chemisch gelöst werden können.

Sollte eine Verbindung zwischen dem Hüllrohr 3 und den Tabletten 2 vorliegen, so kann durch einen Abstreifer zunächst eine mechanische Abtrennung der Tabletten von den Hüllrohrteilen 16 vorgenommen werden, an die sich bei Bedarf eine Waschung mit einer Säure anschließt. Dadurch kann sichergestellt werden, daß die Metallstreifen 16 ohne anhaftenden Brennstoff nach bekannten Methoden gelagert und beseitigt werden können.

Zum Beispiel kann man die Streifen 16 glätten und aufrollen, um ihr Volumen klein zu halten. Sie können aber auch durch eine weitere Bearbeitung so unterteilt werden, daß sie durch Einbetten in ein Bindemittel für eine Endlagerung gut zu konditionieren sind.

Jedenfalls spart man bei der Erfindung das sonst notwendige Einführen der Metallteile an die zum Auflösen des Brennstoffes dienende Säure. Damit entfällt die Benetzung der Außenseite der Hüllrohre 3 mit brennstoffhaltigen Flüssigkeiten, die zu einer nur schlecht zu beseitigenden Kontamination der zunächst brennstoffreifen Außenfläche der Hüllrohre 3 führt.

10 Patentansprüche
2 Figuren

Patentansprüche

1. Verfahren zur Aufbereitung von Kernbrennstoffen in Brennelementen mit mehreren metallischen Hüllrohren, insbesondere von Leichtwasserreaktoren, wobei die Hüllrohre aus dem Verband des Brennelementes gelöst und einzeln mechanisch zerteilt werden, dadurch gekennzeichnet, daß die Hüllrohre in Längsrichtung geteilt werden, daß der Kernbrennstoff von den Metallteilen gelöst wird und daß der Kernbrennstoff ohne Metallteile in ein zur weiteren Verarbeitung dienendes Säurebad gefüllt wird, während die Metallteile in fester Form durch Einbetten in ein Bindemittel zur Endlagerung konditioniert werden.

2. Verfahren nach Anspruch 1, dadurch gekennzeichnet, daß die Längsteilung durch eine spanlose Verformung erfolgt.

3. Verfahren nach Anspruch 1 oder 2, dadurch gekennzeichnet, daß das Hüllrohr in mehrere, vorzugsweise drei, Längsstreifen zerlegt wird.

4. Verfahren nach Anspruch 1, 2 oder 3, dadurch gekennzeichnet, daß das Hüllrohr nach der Zerlegung mit einem Abstreifer von Brennstoffresten befreit wird.

5. Verfahren nach einem der Ansprüche 1 bis 4, dadurch gekennzeichnet, daß das Hüllrohr nach dem mechanischen Entfernen des Brennstoffes mit einer den Brennstoff lösenden Säure gewaschen wird.

6. Verfahren nach einem der Ansprüche 1 bis 5, dadurch gekennzeichnet, daß das Hüllrohr vor dem Einbetten in das Bindemittel mechanisch zerkleinert, vorzugsweise geschreddert wird.

7. Verfahren nach einem der Ansprüche 1 bis 6, dadurch gekennzeichnet, daß der Brennstoff vor dem Einbringen in die Säure mechanisch zerkleinert wird.

8. Einrichtung zum Auftrennen von Hüllrohren zur Freisetzung des von diesen umschlossenen Brennstoffs, dadurch gekennzeichnet, daß ein Messerhalter (8) mit einer dem Hüllrohrdurchmesser angepaßten Führungsbohrung (9) vorgesehen ist, und daß der Führungsbohrung (9) Trennmesser (12) zugeordnet sind, die eine Längsteilung des Hüllrohres (3) ergeben, wenn es von einem Antriebsmittel durch die Führungsbohrung (9) bewegt wird.

9. Einrichtung nach Anspruch 8, dadurch gekennzeichnet, daß der Führungsbohrung (9) Führungsräder (5,6) vorgeschaltet sind.

10. Einrichtung nach Anspruch 8, dadurch gekennzeichnet, daß die Führungsbohrung (9) einen Einführungstrichter (10) aufweist.

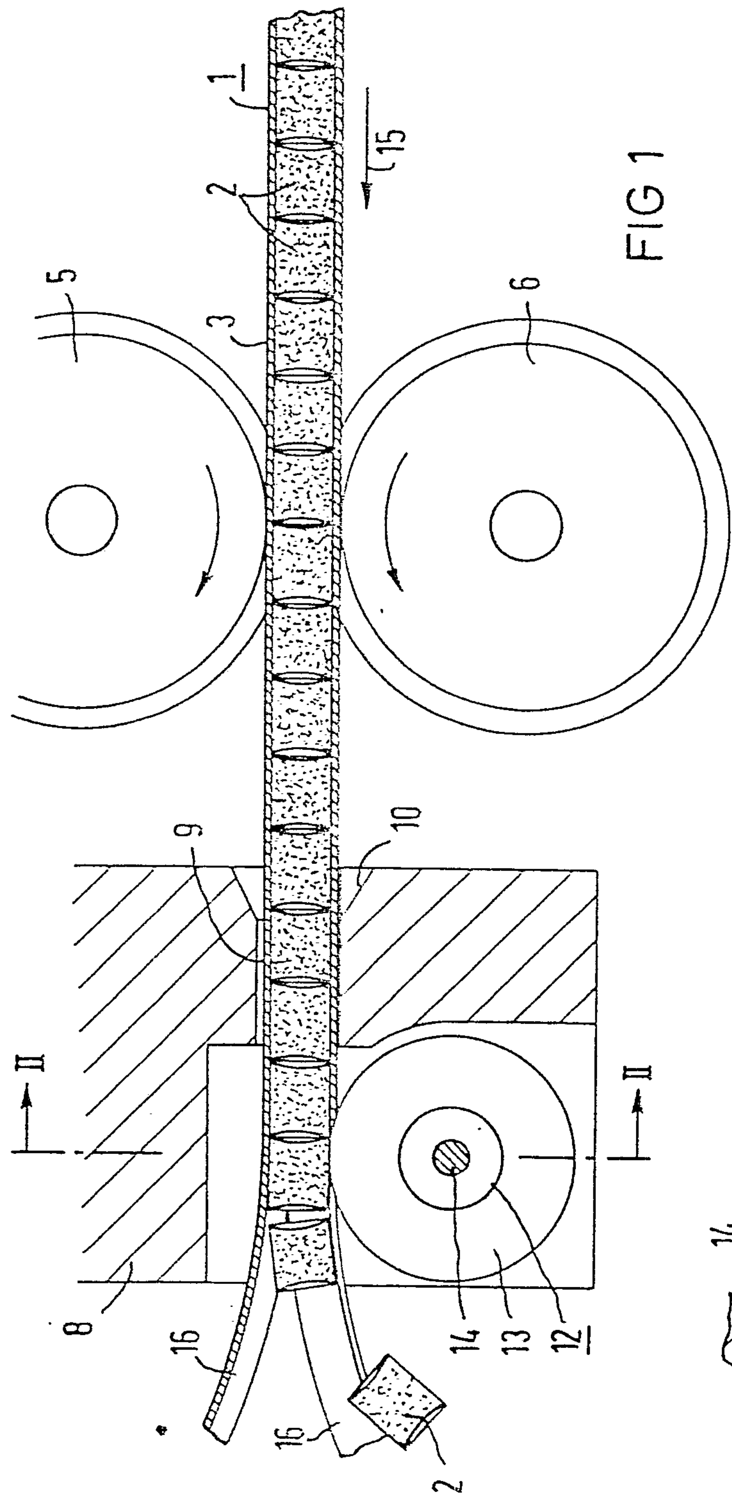


FIG 1

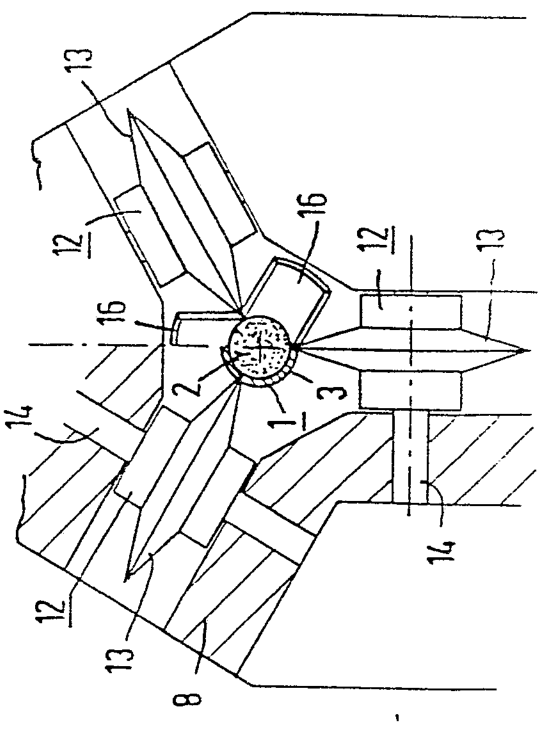


FIG 2

Europäisches Patentamt

# EUROPÄISCHER RECHERCHENBERICHT

0039815
Nummer der Anmeldung

EP 81103146.7

| EINSCHLÄGIGE DOKUMENTE | | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| | DE - A1 - 2 722 472 (NOVATOME IND.)<br>* Fig.1; Ansprüche *<br>-- | 1,6,9,10 | G 21 C 19/36 |
| | DE - A - 1 815 867 (SAINT-GOBAIN)<br>* Fig.1-18; Seiten 3,4,11,18,20; Ansprüche *<br>-- | 1,5,8 | |
| | DE - A - 1 489 947 (GESELLSCHAFT FÜR KERNFORSCHUNG)<br>* Fig.1,2; Seite 3; Ansprüche *<br>-- | 1,2,3,4,6,7,8 | RECHERCHIERTE SACHGEBIETE (Int. Cl.3) |
| | DE - A - 1 464 978 (KABA)<br>* Ansprüche *<br>-- | 1,4,5,6,7 | G 21 F 9/00<br>G 21 C 19/00 |
| | DE - B - 1 210 494 (COMMISSARIAT À L'ENERGIE ATOMIQUE)<br>* Fig. 1-5 *<br>---- | 1,2,3,8 | |

KATEGORIE DER GENANNTEN DOKUMENTE
X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 20-07-1981 | KRAL |

EPA form 1503.1 06.78